# EUROPÄISCHE PATENTSCHRIFT

(11) **EP 0 809 456 B1**
(45) Veröffentlichungstag und Bekanntmachung des Hinweises auf die Patenterteilung: **19.05.1999**
(21) Anmeldenummer: 96902982.6
(22) Anmeldetag: 06.02.1996
(51) Int. Cl.: A47J 43/07

(54) **STABMIXER ZUM RÜHREN ODER ZERKLEINERN VON NAHRUNGSMITTELN**
HAND BLENDER FOR BLENDING OR GRINDING FOODSTUFFS
MELANGEUR A MAIN PERMETTANT DE BATTRE OU BROYER DES ALIMENTS

(30) Priorität: 13.02.1995 DE 19504638
(43) Veröffentlichungstag der Anmeldung: 03.12.1997
(73) Patentinhaber: Braun Aktiengesellschaft, Frankfurt am Main (DE)
(72) Erfinder: PENARANDA, Mariano, E-08005 Barcelona (ES); MASIP, Josep, M., E-08035 Barcelona (ES); RAFOLS, Robert, E-08100 S. Fost de Campcentelles (ES); CUESTA, Xavier, E-08009 Barcelona (ES); BERGHAMMER, Conrad, D-65203 Wiesbaden (DE)
(86) Internationale Anmeldenummer: EP9600478
(87) Internationale Veröffentlichungsnummer: WO9625079

(56) Entgegenhaltungen:
- EP-A- 0 043 773
- EP-A- 0 071 496
- CH-A- 351 375

## Beschreibung

Die vorliegende Erfindung bezieht sich auf einen Stabmixer zum Rühren oder Zerkleinern von Nahrungsmitteln gemäß dem Oberbegriff des Anspruchs 1.

Ein Stabmixer ist bereits aus der EP-A2-0 529 287, Fig. 4, bekannt. Dieser Stabmixer besitzt ein langgestrecktes, rohrförmiges Gehäuseteil, in dem eine Arbeitswelle mit Abstand zu den Wänden des Gehäuses drehbar geführt ist. Am oberen Bereich befindet sich im Gehäuse der Elektromotor der entweder fest oder lösbar mit der Arbeitswelle kuppelbar ist. An dem unteren, in dem Bereich des Abtriebsendes der Welle befindlichen Gehäuseende dieses Wellengehäuses ist eine Gehäuseglocke angeordnet, die eine solche Querschnittsabmessung senkrecht zu der Achse der Arbeitswelle aufweist, daß dort ein Messer aufgenommen werden kann. Die Gehäuseglocke ist zu dem rohrförmigen Gehäuseteil hin mittels eines Deckels oder einer Abdeckplatte abgedeckt und die Arbeitswelle ist in diesem Bereich in einem Lager gehalten.

Üblicherweise wird ein solcher Stabmixer in Verbindung mit einem Behälter eingesetzt, in dem die zu zerkleinernden oder zu rührenden Nahrungsmittel, die die unterschiedlichste Konsistenz über zähfließend bis flüssig aufweisen, eingefüllt werden. Beim Zerkleinern und Rühren ist es zu beobachten, daß sich innerhalb der Glocke ein Vakuum aufbaut, da die Öffnung der Glocke auf dem Boden des Behälters aufgesetzt und daher verschlossen bzw. eingeengt wird. Dabei werden die Nahrungsmittel zwar über die Schlitze der Glocke herausgefördert, es können aber keine Nahrungsmittel über die Öffnung nachgesaugt werden. Dabei entsteht ein Unterdruck in dem unteren Raum der Glocke. Um dennoch ein gleichmäßiges Vermischen und Zerkleinern zu erzielen, muß die Glocke, also das Gerät, nach oben bzw. unten, also hin- und herbewegt werden, damit alle Nahrungsmittel über die Öffnung der Glocke angesaugt und dann vom Messer erfaßt werden können. Das Anheben des Stabmixers erfordert aufgrund des zwischen dem Topfboden und der Glocke gebildeten Vakuums einen nicht unerheblichen Kraftaufwand, was zwangsweise zu einer unbequemen Handhabung des Stabmixers führt. Auch das beim Anheben auftretende Losbrechmoment kann zum Kippen des Behälters oder zu einem beschleunigten Herausheben der Glocke aus dem Rührgut führen. Darüber hinaus kann an dem Arbeitsteil, d.h., an dem Rührwerkzeug oder an dem Messer, anhaftende Masse verspritzen.

Aus der CH-A-351 375 ist weiterhin eine Rühr- und Zerkleinerungseinrichtung bekannt, die aus zwei in einer glockenförmigen Abschirmung auf einer Antriebswelle übereinander drehbar gelagerten Arbeitswerkzeugen besteht. Das untere Arbeitswerkzeug ist von einem Ansaugrohr umgeben, über das die Nahrungsmittel den beiden Arbeitswerkzeugen zugeführt und über dessen Außenwand und Abschirmung diese wieder nach außen befördert werden.

Ausgehend von dem vorstehend angegebenen Stand der Technik und der beschriebenen Problematik liegt der vorliegenden Erfindung nun die Aufgabe zugrunde, einen Stabmixer der eingangs beschriebenen Art derart auszubilden, daß die Nahrungsmittel im Betrieb des Arbeitsgerätes mit Luft besser durchmischt werden und gleichzeitig ein eventueller Aufbau eines Vakuums im Bereich der Gehäuseglocke kontrollierbar ist oder gar nicht erst entsteht.

Die vorstehende Aufgabe wird für einen Stabmixer gemäß den Merkmalen des Anspruchs 1 gelöst.

Durch die Erfindung wird im Betrieb des Stabmixers Luft über den Strömungskanal in den unteren Raum der Gehäuseglocke zugeführt, die sich mit den Nahrungsmitteln vermischt. Je nachdem, wieviel Luft dem unteren Raum der Gehäuseglocke zugeführt wird, werden die Nahrungsmittel mehr oder weniger mit Luft vermischt. Gleichzeitig kann der im unteren Raum bei rotierendem Arbeitswerkzeug beim Durchmischen der Nahrungsmittel eventuell entstehende Druck durch die Luftzufuhr geregelt werden, so daß die zwischen der Glocke und dem Boden des Behälters durch das rotierende Arbeitswerkzeug entstehenden Ansaugkräfte reduziert oder gar ganz aufgehoben werden. Dies erleichtert die Handhabung des Gerätes, ohne daß der Behälter beim Anheben des Stabmixers ebenfalls angehoben wird und dadurch seine stabile Standlage verliert.

Die Mittel zum Einbringen der Luft in den unteren Raum des Stabmixers können dabei verschiedenartig ausgebildet sein. In einer ersten Ausführungsform der Erfindung kann der Stabmixer mit einem Gabläse (Anspruch 2) gebildet werden, über das die Luft über den Strömungskanal in den unteren Raum von der Atmosphäre her eingeblasen wird. Dabei kann das Gebläse beispielsweise ein Gebläserad sein, das an der Antriebswelle des Arbeitswerkzeuges befestigt ist und das so bei Drehung des Arbeitswerkzeuges mitdreht. Das Gebläse kann aber auch aus einem separat im Stabmixer integrierten Lüftermotor mit Gebläserad bestehen, der, unabhängig vom Antriebsmotor des Stabmixers, von einer Bedienungsperson oder auch selbsttätig über eine elektrische Steuereinrichtung betätigbar ist.

Nach den Merkmalen des Patentanspruchs 3 bestehen die Mittel zur Lufteinbringung in den unteren Raum darin, daß der Stabmixer und die Gehäuseglocke so ausgebildet sind, daß bei der Rotation des Stabmixers von diesem im unteren Raum ein Unterdruck erzeugt wird, der dann über den mit der Atmosphäre verbundenen Strömungskanal vermindert bzw. abgebaut werden kann. Bei dieser Ausführung kann dann ein aufwendiges Gebläse entfallen; es kann aber auch als zusätzlicher Strömungsbeschleuniger dennoch hinzugefügt werden.

Beim Zerkleinern bzw. Pürieren von Nahrungsmitteln werden diese von dem rotierenden Stabmixer von der unteren Öffnung der Gehäuseglokke her in den unteren Raum angesaugt und über am Umfang der Gehäuseglocke ausgebildete Schlitze nach außen gefördert. Dabei entsteht in dem unteren Raum ein Unterdruck, der, wenn der untere Raum erfindungsgemäß über einen Strömungskanal mit durch ein Ventil variablem Querschnitt mit der Atmosphäre verbunden ist, in bestimmten Grenzen gehalten bzw. abgebaut werden kann. Hierbei strömt von der Atmosphäre über den Strömungskanal in den unteren Raum Luft ein, die sich mit den Nahrungsmitteln vermischt und so entsprechend der eingeführten Luftmenge zu einem mehr oder weniger mit Luft vermischten Brei führt. Gleichzeitig kann durch den Abbau des Unterdrucks im unteren Raum die Ansaugkraft, die zwischen der Gehäuseglocke und dem Boden eines Behälters beim Aufsitzen dieser am Boden entsteht, verringert werden.

Gemäß den Merkmalen des Patentanspruchs 4 ist der Strömungskanal so eng bemessen, daß der Druck im unteren Raum in bestimmten Grenzen gehalten wird. Nach den Merkmalen des Patentanspruchs 5 kann aufgrund der speziellen Ausbildung des Strömungskanals im Gehäuse des Stabmixers der untere Raum selbsttätig entlüftet werden.

Eine besonders einfache Entlüftung des Raumes der Glocke kann dadurch erfolgen, wenn der Strömungskanal in der Arbeitswelle ausgebildet ist, die von einer Hohlwelle gebildet wird (Anspruch 6).

Durch das im Strömungskanal angeordnete Ventil kann selbsttätig oder von Hand die Luftzufuhr zum unteren Raum der Gehäuseglocke geregelt werden. Das Ventil dient einerseits dazu, den Druck im unteren Raum zu regeln und andererseits ein Eindringen von Nahrungsmitteln in den Strömungskanal zu vermeiden. Deshalb ist es vorteilhaft, wenn das Ventil ganz in der Nähe des unteren Raumes ausgebildet ist.

Durch die Merkmale des Patentanspruchs 8 öffnet dabei das Ventil in Abhängigkeit des Gerätebetriebes, indem durch die am Ventil anstehende Druckdifferenz das Ventilteil in seine Offenstellung gelangt.

Durch die Merkmale des Anspruchs 9 ist das Ventil in der Abdeckplatte ausgebildet, die den von Nahrungsmitteln füllbaren unteren Raum vom oberen Raum trennt, wobei der obere Raum frei von Verschmutzungen sein muß. In den Strömungskanal können also vom unteren Raum her keine Nahrungsmittel eindringen, da das druckabhängige Ventil nur öffnet, wenn Luft zum unteren Raum hin einströmt, so daß dabei die Nahrungsmittel vom Strömungskanal ferngehalten werden.

Durch die Merkmale der Ansprüche 10 und 11 kann das Ventilteil sowohl axial wie radial zur Arbeitswelle verschiebbar sein. Je nach Aufbau des Ventils und der Art und Weise, unter welchen Betriebszuständen und mittels welcher Teile ein solches Ventil geöffnet und geschlossen wird, kann ein verschiebbarer Körper, der ein Verschlußteil des Strömungskanals darstellt, eingesetzt werden, der unter axialer Verschiebung zu der Arbeitswelle den Strömungskanal verschließt oder freigibt, während er sich dann, wenn Fliehkräfte zur Verschiebung eines solchen verschiebbaren Körpers ausgenutzt werden sollen, radial zu der Arbeitswelle verschieben sollte.

Als Ventil kann ein einfaches Kugel- oder Tellerventil eingesetzt werden, dessen Ventilteil, beispielsweise mittels einer Feder, geschlossen gegen den Dichtsitz des Strömungskanals gehalten wird (Anspruch 12); es kann aber auch eine Federzunge, beispielsweise aus Metall oder aus Kunststoff, hierzu verwendet werden, die in einer Schließstellung durch innere Biegekräfte selbsttätig vorgespannt ist und sich mit einem Druckaufbau öffnet. Über eine solche Feder ist gleichzeitig der Öffnungswiderstand einstellbar, indem unterschiedliche Federn eingesetzt werden oder eine Feder entsprechend vorgespannt wird.

Eine einfach zu betätigende Anordnung des Ventilkörpers stellt eine solche Variante dar, bei der ein verschiebbares Teil eines Lagers zwischen der Gehäuseglocke und dem Wellengehäuse gebildet ist, das sich selbsttätig oder zwangsgeführt verschiebt und den Strömungskanal zu dem Bereich in der Gehäuseglocke freigibt (Anspruch 13).

In einer weiteren Ausführungsform (Anspruch 14) ist die Arbeitswelle in zwei Teile unterteilt. Beide Teile werden über eine Kupplung miteinander verbunden derart, daß jeweilige Kupplungsteile, die dem einen Arbeitswellenteil bzw. dem anderen Arbeitswellenteil zugeordnet sind, ineinander eingreifen und Führungsteile besitzen, die unter einer radialen Verdrehung der Arbeitswellenteile gegeneinander eine axiale Verschiebung der Arbeitswelle so bewirken, daß sich die Arbeitswelle verlängert oder verkürzt, um so einen Strömungskanal durch diese Verschiebebewegung freizugeben oder zu verschließen.

Solche Führungsteile können durch Vorsprünge an dem einen Kupplungsteil und Nockenflächen an dem anderen Kupplungsteil gebildet werden (Anspruch 15). In einer konstruktiv einfachen Ausführung werden die Vorsprünge durch sich radial zu der Achse der Arbeitswelle erstreckenden Stifte hergestellt, die in einer entsprechenden Bohrung in der Arbeitswelle eingesteckt sein können. Diese Stifte werden dann an Führungsflächen eines hülsenförmigen Teils geführt, das dem jeweils anderen Teil der Welle zugeordnet ist und das Wellenteil, das die Stifte aufweist, zur Führung übergreift. In einer solchen Ausführung werden die beiden Arbeitswellenteile in einer Ausgangsstellung unter dem Druck einer über die Arbeitswelle aufgeschobenen Spiralfelder, die sich an einem Gehäuseteil widerlagert, in einem zusammengedrückten Zustand gehalten.

Mit dem Anlaufen des Arbeitsgeräts bzw. mit zunehmender Drehzahl werden die Nokkenflächen an den Stiften durch eine axiale, in Richtung der Arbeitswelle wirkende Kraftkomponente entlanggeführt, so daß sich das eine Arbeitswellenteil gegen das andere Arbeitswellenteil derart verschiebt, daß die Arbeitswelle insgesamt in axialer Richtung verschoben und damit verlängert wird. Unter dieser Verschiebung können dann die Ventilteile betätigt werden, die den Strömungskanal freigeben.

Weiterhin kann in der Arbeitswelle eine Nut vorgesehen werden, die sich hinsichtlich der Luftzuführung zu der Gehäuseglocke derart verschiebt, daß diese einen Dichtring überfährt und dadurch dieses Ventil öffnet (Anspruch 16). Eine Freigabe durch eine Ventildichtung einer solchen Nut kann auch dadurch erreicht werden, daß sich die gesamte Gehäuseglocke, die an der Arbeitswelle bzw. an dem Wellengehäuse verschiebbar gelagert ist, verschiebt, wenn sie auf den Boden eines Rührbehälters aufgesetzt wird und dann bei Verschiebung ein Strömungsweg zur Atmosphäre freigibt.

Es kann möglich sein, daß es der Benutzer eines Arbeitsgeräts wünscht, dieses Arbeitsgerät in der herkömmlichen Art und Weise einzusetzen, d.h. ohne eine strömungsmäßige Verbindung des Bereichs unterhalb der Gehäuseglocke zu der Außenatmosphäre. Um für einen solchen Betrieb das Ventil verriegeln bzw. sperren zu können, ist das Wellengehäuse gegen ein anderes Gehäuseteil verdrehbar gehalten (Anspruch 17). Unter Verdrehung dieser beiden Gehäuseteile gegeneinander können verschiedene Stellungen eingestellt werden, in denen sich entweder das Ventil öffnet oder das Ventil unter allen Betriebszuständen des Geräts geschlossen verbleibt. Weiterhin ist es möglich, beispielsweise unter Verdrehung der beiden Gehäuseteile gegeneinander eine Feder oder ein Federteil, das gegen ein Ventilteil einwirkt, unterschiedlich vorzuspannen, so daß der Zeitpunkt, zu dem sich das Ventil öffnet und ein Strömungskanal freigeben wird, vorab einstellbar ist.

Schließlich wird eine einfach zu betätigende und gut schließende Anordnung des Ventilkörpers durch die Merkmale des Anspruchs 18 erreicht. Derartige Schiebeventile arbeiten rein wegabhängig, so daß sie von einer Bedienungsperson einfach eingestellt werden können, um einen gewünschten Druck im unteren Raum zu erhalten.

Durch die Merkmale des Anspruchs 19 schließen die Arbeitswellenteile das Ventil durch eine Feder selbsttätig, wenn sie in ihre Nullstellung gebracht werden.

Durch das Klappenventil nach Anspruch 20 kann dieses so ausgebildet werden, daß es in einer Ausführungsform druckabhängig und in einer anderen Ausführungsform mechanisch von Hand regelbar ist. Bei der mechanischen Lösung ist dann die Membran mit einem axial verschiebbaren Schieber verbunden, durch deren Stellung der Öffnungsquerschnitt des Ventilteils bestimmt wird (Anspruch 21).

Weitere Einzelheiten und Merkmale der Erfindung ergeben sich aus der nachfolgenden Beschreibung von Ausführungsbeispielen anhand der Zeichnung. In der Zeichnung zeigt
- Fig. 1: einen Längsschnitt durch das untere Ende eines im Betrieb befindlichen Stabmixers nach der Erfindung, als Prinzipskizze, dessen Gehäuseglocke mit einem Ventil ausgebildet ist, das sich in der offenen Stellung befindet,
- Fig. 2: das Ventil, wie es in Figur 1 dargestellt ist, in einer geschlossenen Stellung,
- Fig. 3: einen Längsschnitt durch ein weiteres Ausführungsbeispiel eines Stabmixers nach der Erfindung im Bereich seines unteren Endes, in vergrößertem Maßstab, mit einem von der Arbeitswelle steuerbaren Ventil, das als Teil des Lagers der Arbeitswelle ausgebildet ist, und zwar in einer geschlossenen Stellung, wobei im Betrieb vom Messer ein Unterdruck im Raum der Gehäuseglocke erzeugt wird,
- Fig. 4: die Darstellung der Figur 3 mit dem Ventil in einer geöffneten Stellung durch axiale Verschiebung der Arbeitswelle,
- Fig. 5: ein weiteres Ausführungsbeispiel eines Stabmixers mit Gehäuseglocke, Wellengehäuse und einem Teil des Motorgehäuses mit einer Verstelleinrichtung für das Ventil,
- Fig. 6: eine mit der Fig. 5 vergleichbare Anordnung, die konstruktiv gegenüber der Ausführung der Fig. 5 in Bezug auf die Verstelleinrichtung geändert ist,
- Fig. 7A, 8A und 7B, 8B: den unteren Teil eines Stabmixers, vergleichbar mit dem Aufbau des Stabmixers nach Fig. 6, in verschiedenen Betriebsstellungen, in vergrößertem Maßstab,
- Fig. 9A, 9B: den oberen Teil eines Stabmixers, vergleichbar mit der Ausführungsform nach Fig. 6, zur Erläuterung der verschiedenen, einstellbaren Öffnungsstellungen des Ventils bei einem solchen Stabmixer, in vergrößertem Maßstab,
- Fig. 10: einen Schnitt durch einen nicht erfindungsgemäßen Stabmixer im Bereich der Gehäuseglocke, mit einem durch die Arbeitswelle führenden Strömungskanal, ohne Ventil,
- Fig. 11: einen Längsschnitt durch eine Gehäuseglocke mit einer weiteren Ausführungsform eines Ventils in geschlossener Stellung und in vergrößertem Maßstab,
- Fig. 12: einen Längsschnitt durch eine Gehäuseglocke mit einer weiteren Ausführungsform eines Ventils in geschlossener Stellung und in vergrößertem Maßstab,
- Fig. 13: wie Fig. 12, jedoch mit geöffnetem Ventil,
- Fig. 14: einen Längsschnitt durch eine Gehäuseglocke mit einer weiteren Ausführungsform eines Ventils in geschlossener Stellung und in vergrößertem Maßstab, und
- Fig. 15: wie Fig. 14, jedoch mit geöffnetem Ventil.

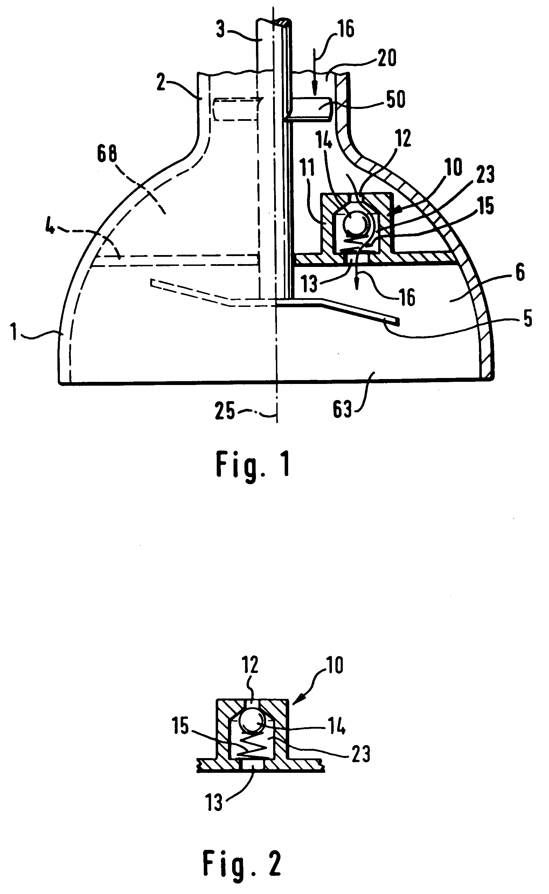

Ein Stabmixer, wie er in Fig. 1 dargestellt ist, besitzt eine Gehäuseglocke 1, die am Ende eines Wellengehäuses 2, das nur ansatzweise in Fig. 1 dargestellt ist, angeordnet ist. Innerhalb des Wellengehäuses verläuft eine Arbeitswelle 3. Der Bereich innerhalb der Gehäuseglocke 1 ist gegenüber dem Wellengehäuse 2 mittels einer Abdeckplatte 4 (nur rechts von der Mittellinie geschnitten dargestellt) abgedeckt bzw. abgedichtet, so daß keine Nahrungsmittel, die mit diesem Stabmixer vermischt und/oder zerkleinert werden, in das Wellengehäuse 2 eindringen können. An dem Ende der Arbeitswelle 3 ist ein Rührwerkzeug oder Zerkleinerungsmesser 5 befestigt, das sich in dem Raum 6 der Gehäuseglocke 1 frei bewegen kann. Die Abdeckplatte 4 trennt das Glockengehäuse 1 in einen oberen und unteren Raum 68, 6.

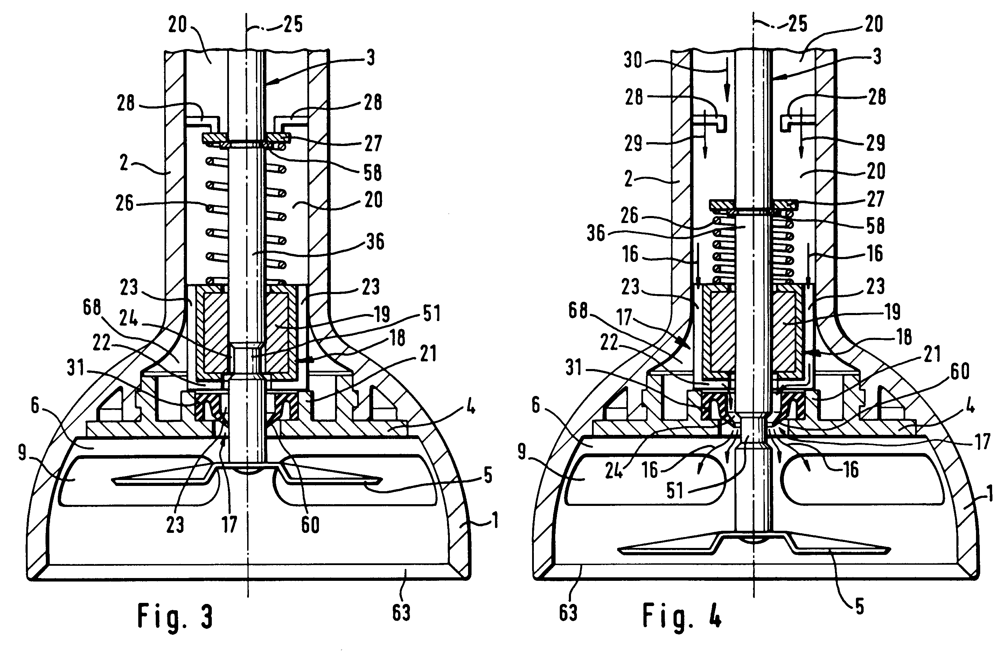

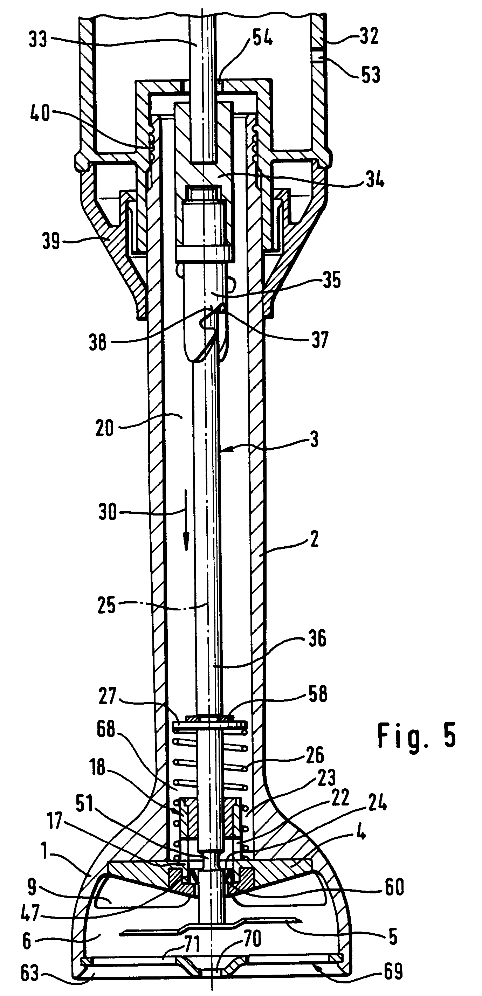

Zum Rühren und/oder Zerkleinern von Nahrungsmitteln wird der Stabmixer mit der Gehäuseglocke 1 in einen Behälter eingetaucht, wie dies nicht dargestellt ist, und die in den Behälter eingefüllte Masse bearbeitet, d.h. gerührt oder zerkleinert. Während des Zerkleinerns der Nahrungsmittel oder unter der sich ändernden Konsistenz der Nahrungsmittel wird die Öffnung 63 der Gehäuseglocke 1 zum Boden 8 eines solchen Behälters 7 hin abgedichtet, so daß sich, auch in Folge der sich umwälzenden Masse im Bereich der Gehäuseglocke 1, in dem unteren Raum 6 der Gehäuseglocke 1 ein Unterdruck aufbaut. Dies kann zur Folge haben, daß die Masse nicht ausreichend umgewälzt wird, so daß sich keine homogen zerkleinerte und vermischte Masse bildet. Üblicherweise sind im unteren Bereich einer solchen Gehäuseglocke 1 Schlitze 9 vorgesehen, wie dies beispielsweise die Figuren 3 und 4 zeigen, über die die zu rührende oder zu zerkleinernde Masse zwischen dem unteren Raum 6 und der Außenseite der Gehäuseglocke 1 zirkulieren kann.

Weiterhin kann es in Abhängigkeit der Masse, die bearbeitet werden soll, von Vorteil sein, einen definierten Unterdruck in dem unteren Raum 6 innerhalb der Gehäuseglocke 1 einzustellen, um beispielsweise eine bestimmte Verweilzeit der Masse in dem Raum 6 innerhalb der Gehäuseglocke 1 erzielen zu können. Es kann aber auch sein, daß zusätzlich oder überhaupt nur über das an der Arbeitswelle 3 befestigte Gebläserad 50 im Betrieb Luft gegen die Abdeckplatte 4 gedrückt wird (Fig. 1).

Um diesen Effekt zu erreichen, d.h., um zum einen einen Druckaufbau innerhalb des unteren Raums 6 zu vermeiden und um andererseits, falls durch das Messer 5 ein Unterdruck in dem Raum 6 erzeugt wird, diesen definiert einzustellen oder definiert Luft durch das Gebläserad 50 in den Raum 6 einzublasen, ist in der Ausführungsform der Fig. 1 an der Abdeckplatte 4 ein Ventil 10 vorgesehen, das auch nach Fig. 2 durch einen Ventilkäfig 11 mit einer Eintrittsöffnung 12 und einer Austrittsöffnung 13 versehen ist. Innerhalb des Ventilkäfigs 11 ist eine Kugel 14 angebracht, die mittels einer Feder 15 gegen die Eintrittsöffnung 12 gedrückt wird und die Austrittsöffnung in einem Ruhezustand, d.h. in einem Zustand, in dem der Stabmixer nicht betrieben wird, verschließt.

Mit einem sich zunehmend aufbauenden Unterdruck in dem Raum 6 der Gehäuseglocke 1 entsteht an der Austrittsöffnung 13 des Ventilkäfigs 11 eine Saugwirkung, die dazu führt, daß mit dem Überschreiten eines bestimmten Druckwerts Luft durch den Strömungskanal 23 angesaugt wird, wie dies durch die Strömungspfeile 16 in Fig. 1 angedeutet ist. Der Zeitpunkt der Ventilöffnung kann über die Art der Feder 15 eingestellt werden. Wird vom Messer 5 kein Unterdruck oder nur sehr wenig Unterdruck erzeugt, so dient dann das Gebläserad 50 als Lufterzeuger, durch das ebenfalls bei einem bestimmten Überdruck im Ringraum 20 das Ventil 10 geöffnet wird.

Wie verständlich wird, kann zu keinem Zeitpunkt Nahrungsmittel über das Ventil 10 in Fig. 1 in das Wellengehäuse 2 eintreten oder über das Ventil 10 in dem Boden 8 aus dem Behälter 7 austreten, da vor einer Öffnung des Ventils 10 ein solcher Unterdruck von dem rotierenden Messer 5 (siehe Fig. 1) in dem Raum 6 aufgebaut wird, daß nach dem Öffnen des Ventils 10 stets eine Luftströmung zu dem Raum 6 hin erzeugt wird, die die Austrittsöffnung 13 freihält. Sowie der Unterdruck in dem Raum 6 geringer wird, wird das Ventil 10 geschlossen, wie dies die Fig. 2 zeigt, und die Luftzufuhr in den Raum 6 beendet.

Während in den Figuren 1 und 2 ein Ventil 10 dargestellt ist, das einen einfachen Aufbau besitzt, um das Prinzip der Erfindung zu erläutern, sind in den weiteren Figuren vorteilhatte konstruktive Anordnungen dargestellt, und zwar in Verbindung mit einem Stabmixer, die nachfolgend erläutert werden. Dabei wird hier immer davon ausgegangen, daß durch das rotierende Messer 5 ein Unterdruck im Raum 6 erzeugt wird. Es ist aber auch hier möglich, eine Gebläseinrichtung 50 einzusetzen, durch die die Druckdifferenz zwischen dem oberen Raum 68 und dem unteren Raum 6 ebenfalls gebildet wird.

Soweit die Bauelemente der einzelnen Ausführungsformen gleich oder miteinander vergleichbar sind, werden dieselben Bezugszeichen verwendet, so daß die Erläuterungen zu der einen Ausführungsform auf die jeweils andere Ausführungsform sinngemäß übertragbar sind.

In der Ausführungsform des Stabmixers, wie er in den Figuren 3 und 4 dargestellt ist, ist ein Ventil, das allgemein mit dem Bezugszeichen 17 bezeichnet ist, im Bereich eines Lagers 18 und unter Einbeziehung der Arbeitswelle 3 gebildet. Mit einem solchen Lager 18 wird die Arbeitswelle 3 im unteren Teil des Wellengehäuses 2 oder im Bereich der Abdeckplatte 4 drehbar gelagert. Lagerteile 19 des Lagers 18 sind zum einen zwischen dem Ringraum 20 und dem oberen Raum 68 eingesetzt und werden sowohl am Wellengehäuse 2 wie an der Arbeitswelle 3 gehalten. An dem zu dem Messer 5 hin weisenden Ende ist eine Lageraufnahme 21 in der Abdeckplatte 4 ausgebildet, wo der Dichtring 31 klemmend gehalten ist. In den Lagerteilen 19 grenzen zum einen oberhalb der Lageraufnahme 21 sich radial erstreckende Strömungskanäle 22 an sowie andererseits sind in dem oberen Bereich, der an der Innenwand des Wellengehäuses 2 anliegt, sich axial erstreckende Strömungskanäle 23 ausgebildet. Weiterhin besitzt die Arbeitswelle 3 eine umlaufende Nut 51, die in einer Grundstellung, wie sie in Fig. 3 dargestellt ist, durch die Lagerteile 19 vollständig umschlossen wird.

In der Grundstellung der Fig. 3 wird die Arbeitswelle 3, die in Richtung der Achse 25 verschiebbar geführt ist, durch eine Spiralfeder 26 gehalten, die sich zum einen an der oberen Stirnfläche die Lagerteile 19 und zum anderen an einer Mitnehmerscheibe 27 abstützt. Die Mitnehmerscheibe 27, die axial unverrückbar über den in der Arbeitswelle 3 eingreifenden Sicherungsring 58 mit der Arbeitswelle 3 verbunden ist, legt sich in der in Fig. 3 gezeigten Grundstellung, in der der Stabmixer nicht betrieben wird, gegen ein Widerlager 28 an, das sich radial nach innen von dem Wellengehäuse 2 erstreckt, allerdings derart, daß Strömungskanäle bzw. Strömungsdurchgangswege 29 zwischen dem Widerlager 28 und dem Außenumfang der Arbeitswelle 3 verbleiben, so daß die Widerlager 28 daher als Stege ausgebildet sind.

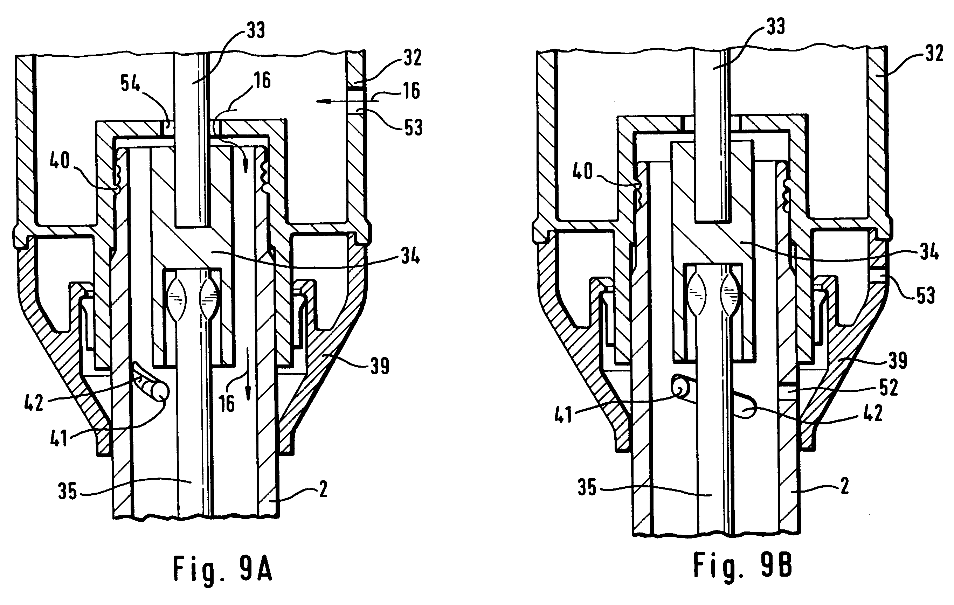

Beim Betrieb des Stabmixers, d.h. wenn das Messer 5 über die Arbeitswelle 3 in Rotation versetzt wird, kann die Arbeitswelle 3 nach unten axial, wie durch den Pfeil 30 in Fig. 4 angedeutet ist und sich aufgrund der weiter unten liegenden Stellung des Messers 5 deutlich ergibt, durch Verdrehen einer Verstelleinrichtung 37, 38 (Fig. 5) und 41, 42 (Fig. 9A, 9B] verschoben werden, so daß entsprechend die Nut 51 nach unten verschoben wird und in die Dichtlippe 60 eingreift, so daß die Dichtlippe 60 nicht mehr an der Wandung der Nut 51 anliegt und dabei den Strömungskanal 24 mit dem unteren Raum 6 verbindet. Hierdurch kann Luft entsprechend der Strömungspfeile 16 über das Innere des Wellengehäuses 2, den Durchgangsweg 29 zwischen dem Widerlager 28 und der Arbeitswelle 3, dem axial gerichteten Strömungskanal 23, dem radial gerichteten Strömungskanal 22 und wiederum dem axial gerichteten Strömungskanal 24 in den unteren Raum 6 der Gehäuseglocke 1 einströmen.

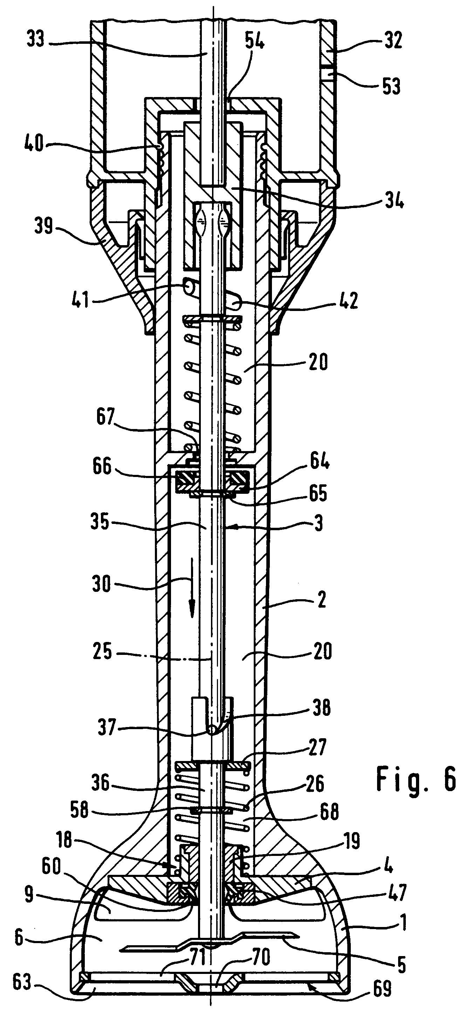

Um die Luftzufuhr in den Raum 6 anschließend wieder beenden zu können, wird die Arbeitswelle 3 mittels der Verstelleinrichtung 37, 38 oder 41, 42 wieder nach oben zu derjenigen Stellung, die in Fig. 3 dargestellt ist, unter der Kraft der in Fig. 4 zusammengedrückten Spiralfeder 26 verschoben, so daß der axial gerichtete Strömungskanal 24 zwischen der Arbeitswelle 3 und der Dichtung 31, die an der Abdeckplatte 4 befestigt ist, durch die Dichtlippe 60 getrennt wird und die Nut 51 wieder in das Lagerteil 19 eintaucht. Dabei kommt die Dichtlippe 60 wieder dichtend am unteren Ende der Arbeitswelle 3 zur Anlage (Fig. 4). Die Verschiebung der Arbeitswelle 3 in Richtung des Pfeils 30 kann manuell oder drehzahlabhängig erfolgen. Hierfür vorgesehene Anordnungen sind in den Figuren 5 und 6 dargestellt.

Der Stabmixer, wie er in einer Schnittansicht in Fig. 5 gezeigt ist, ist hinsichtlich der Gehäuseglocke 1 und der Ausbildung der Strömungskanäle 20, 22, 24, 6 mit der Ausführungsform der Figuren 3 und 4 vergleichbar, wobei allerdings das Lager 18 unmittelbar in der Abdeckplatte 4 angeordnet ist. Auch in dieser Ausführungsform weist die Arbeitswelle 3 eine umlaufende Nut 51 auf, die, ausgehend von einer Grundstellung, wie sie in Fig. 5 dargestellt ist, unter Verschiebung der Arbeitswelle 3 nach unten in Richtung des Pfeils 30 einen Strömungskanal 24 zwischen der Arbeitswelle 3 und dem Dichtring 47 freigibt. An dem oberen Ende des Wellengehäuses 2 ist ein Motorgehäuse 32 befestigt, das einen nicht dargestellten Motor aufnimmt, dessen Abtriebswelle 33 angedeutet ist, die in eine Antriebskupplung 34 drehfest eingreift. Das Motorgehäuse 32 ist auf das Ende des Wellengehäuses 2 lösbar aufgesteckt und kann abgetrennt werden, um beispielsweise den unteren Teil 2 des Stabmixers nach Gebrauch zu reinigen.

Die Arbeitswelle 3 nach Fig. 5 ist unmittelbar unterhalb der Abtriebswelle 33 in ein oberes Arbeitswellenteil 35 und ein unteres Arbeitswellenteil 36 unterteilt. Bei dem oberen Arbeitswellenteil 35 handelt es sich um eine Hülse, die mit der Antriebskupplung 34 drehfest verbunden ist, in die das untere Arbeitswellenteil 36 eingeschoben ist. Das untere Arbeitswellenteil 36 weist einen Stift 37 auf, der sich radial erstreckt, der an einer Nockenfläche 38 des Arbeitswellenteils 35 anliegt, die im Bereich des unteren Endes des hülsenförmigen, oberen Arbeitswellenteils 35 ausgebildet ist. Diese Nockenfläche 38 verläuft spiralförmig, so daß unter Verdrehung des unteren Arbeitswellenteils 36 zu dem oberen Arbeitswellenteil 35 dieser Stift 37 entlang der Nockenfläche 38 geführt wird und sich dadurch das untere Arbeitswellenteil 36 in Richtung des Pfeils 30 nach unten verschiebt. Hierbei wird die Arbeitswelle 3, ausgehend von einer Stellung, wie sie in Fig. 5 und beispielsweise auch in Fig. 3 dargestellt ist, zu einer nach unten verschobenen Stellung bewegt, wie sie in der Fig. 4 gezeigt ist.

Über die Spiralfeder 26, wie sie in Fig. 5 dargestellt ist, und die in ihrer Wirkung der Spiralfeder 26 der Ausführungsform der Figuren 3 und 4 entspricht, kann, in Abhängigkeit der Drehzahl und der Kräfte, die über die Nockenfläche 38 auf den Stift 37 ausgeübt werden, der Zeitpunkt der Verschiebung eingestellt und/oder beeinflußt werden. Mit zunehmender Drehzahl wird die Kraftkomponente, die über die Nockenfläche 38 auf den Stift 37 in Richtung des Pfeils 30 ausgeübt wird, erhöht, so daß die angestrebte Verschiebung des unteren Arbeitswellenteils 36 gegenüber dem oberen Arbeitswellenteil 35 erreicht wird. Mit wieder abnehmender Drehzahl wird dann unter der Kraft der Spiralfeder 26 das untere Arbeitswellenteil 36 nach oben in das hülsenförmige Arbeitswellenteil 35 verschoben, so daß die den Strömungskanal freigebende Nut 51 in einen Bereich verschoben wird, in dem der Strömungskanal 24, wie er anhand der Figuren 3 und 4 erläutert ist, verschlossen wird. Verbindet der Strömungskanal 24 den unteren Raum 6 mit dem oberen Raum 68, so wird Luft über die Öffnung 53, die Bohrung 54 in den Ringraum 20 nachgesaugt und es strömt Luft in den unteren Raum 6, so daß deren Unterdruck abgebaut bzw. heruntergesetzt wird.

Während in der Fig. 5 ein Stift 37 sowie eine Nockenfläche 38 dargestellt sind, können radial um den Umfang der Arbeitswelle 3 verteilt, mehrere solcher Stifte 37, die jeweils an einer entsprechenden Nockenfläche 38 anliegen, vorgesehen werden, um die auftretenden Kräfte gleichmäßig um den Umfang der Arbeitswelle 3 zu verteilen.

In der Ausführungsform der Figen 6, 7A und 7B ist eine Alternative zu der Ausführungsform der Fig. 5 gezeigt, bei der die Unterteilung der Arbeitswelle 3 in den unteren Teil des Wellengehäuses 2 gelegt ist. Darüberhinaus ist in dieser Ausführungsform das hülsenförmige Arbeitswellenteil das untere Arbeitswellenteil 36, das eine der Ausführungsform der Fig. 5 entsprechende Nockenfläche 38 besitzt, während das obere Arbeitswellenteil 35 in der Hülse geführt wird und den oder die Stifte 37 aufweist, die an der oder den Nockenflächen 38 anliegen. In dieser Anordnung der Fig. 6 ist das Motorgehäuse 32 gegenüber dem Wellengehäuse 2 bzw. einer an dem Ende des Wellengehäuses 2 befestigten Gehäuseaufnahme 39 relativ verschiebbar gehalten. Hierzu ist an dem Ende des Wellengehäuses 2 sowie an der Innenseite des das Wellengehäuse aufnehmenden Teils des Motorgehäuses 32 ein Gewinde 40 vorgesehen. Unter einer Verdrehung des Wellengehäuses 2 gegenüber dem Motorgehäuse 32 wird ein Nockenstift 41, der drehfest der Gehäuseaufnahme 39 zugeordnet ist, in einem schräg verlaufenden Schlitz 42 verschoben, wie dies in einem Vergleich der Fig. 9A, die eine Ausgangsstellung zeigt, wie sie in der Fig. 6 gezeigt ist, gegenüber der Fig. 9B verdeutlicht.

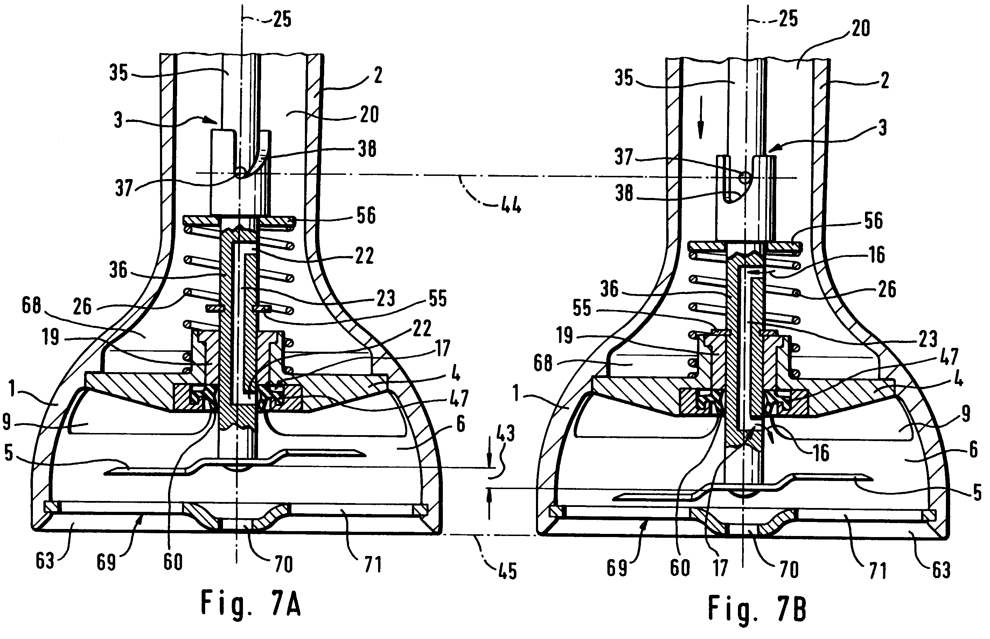

In den Figuren 7A und 7B ist der untere Teil des Wellengehäuses 2 mit der sich daran anschließenden Gehäuseglocke 1 dargestellt, wobei die Verbindung des oberen Arbeitswellenteils 35 und des unteren Arbeitswellenteils 36 dem Aufbau der Fig. 6 entspricht. In den Figuren 7A und 7B ist ein Strömungskanal gezeigt, der sich aus einem oberen und unteren radialen Strömungskanal 22 und einem axialen Strömungskanal 23 zusammensetzt. Die Fig. 7A stellt hierbei eine Stellung dar, in der die Strömungskanäle 22, 23 nicht zu dem Raum 6 unterhalb der Abdeckplatte 4 hin verbunden sind, während die Fig. 7B eine Stellung zeigt, in der das untere Arbeitswellenteil 36 um einen Verschiebeweg 43 entsprechend der Verschiebung der Nockenfläche 38 entlang des Stiftes 37 verschoben ist. Die Linie 44 dient als Orientierungslinie, die die axiale Orientierung des Stifts 37 andeutet, um zu zeigen, daß sich nur das untere Arbeitswellenteil 36 nach unten verschiebt.

Der axiale Kanal 23 ist, im Gegensatz zu der Ausführungsform der Figuren 3 und 4, im Inneren des unteren Arbeitswellenteils 36 verlaufend ausgebildet, der an einem oberen und unteren Ende jeweils mit einem radialen Strömungskanal 22 verbunden ist. Der untere, radiale Strömungskanal 22 wird in dem Ruhezustand des Stabmixers, in der das untere Arbeitswellenteil 36 durch die Spiralfeder 26 nach oben gedrückt wird, durch die Dichtung 47 abgedichtet, während in der unteren Position, die in Fig. 7B gezeigt ist, dieser untere, radiale Strömungskanal 23 durch die Dichtlippe 60 freigegeben wird, so daß eine Strömungsverbindung zwischen dem Raum 6 der Gehäuseglocke 1 und dem Wellengehäuse 2 geschaffen wird. Da in dieser Stellung auch ein auf der Arbeitswelle 3 befestigter Ventilteller 64 mit Dichtring 66, der über einen Sicherungsring 65 auf der Arbeitswelle 3 axial gesichert ist, eine Bohrung 67 freigibt, wird eine Verbindung zur Atmosphäre über die Bohrung 54 und die Öffnung 53 hergestellt (Fig. 6) und dies allerdings nur dann, wenn zusätzlich das Wellengehäuse 2 so verdreht wurde, daß dieses durch die Nockenstift-Schlitzverbindung 41,42 soweit in das Motorgehäuse 32 hineingedreht wurde, daß auch das zweite Ventil 66, 67 öffnet, so wie dies in Fig. 6 dargestellt ist. Hierdurch ist eine genaue Dosierung des Unterdrucks im unteren Raum 6 möglich. In der offenen Stellung der Ventile 22, 60 und 66, 67 kann Luft in den unteren Raum 6 zugeführt werden.

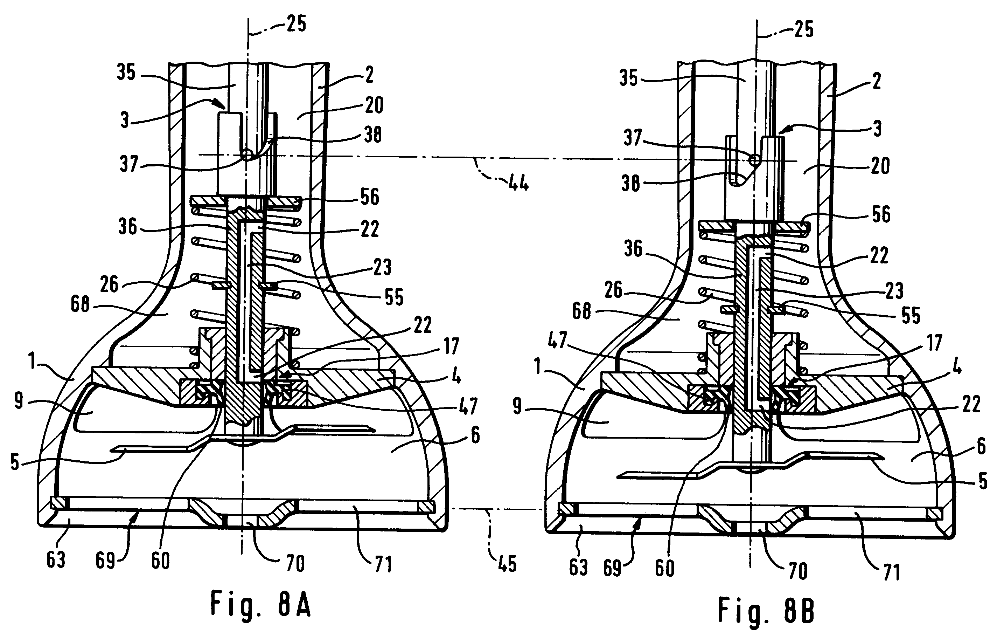

Die Figuren 8A und 8B zeigen Anordnungen, die mit den Figuren 7A und 7B jeweils vergleichbar sind, d.h. jeweilige Stellungen, in denen das untere Arbeitswellenteil 36 nicht nach unten verschoben ist (Ruhestellung, nicht betätigter Stabmixer, Fig. 8A) und zum anderen das untere Arbeitswellenteil nach unten verschoben ist (Betrieb des Stabmixers, Fig. 8B). Allerdings ist in der Anordnung der Figuren 8A und 8B das Wellengehäuse 2 gegenüber dem Motorgehäuse 32 über das Gewinde 40 nach unten in eine Stellung verdreht, wie in der Fig. 9A dargestellt ist. Aufgrund dieser Verdrehung ist das Wellengehäuse 2 nach unten verlängert, wie ein Vergleich der gemeinsamen Orientierungslinie 45 der Figuren 7 und 8 zeigt. Aufgrund dieser Verlängerung des Wellengehäuses 2 zu dem Motorgehäuse 32 nach unten wird, ausgehend von einer Stellung, die in Fig. 8A dargestellt ist, trotz Verschiebung des unteren Arbeitswellenteils 36 nach unten der untere, radiale Strömungskanal 22 nicht freigegeben, d.h. er verbleibt in der nach unten verschobenen Stellung des Arbeitswellenteils 36 durch das Lagerteil 19 abgedeckt.

Aufgrund der Verdrehung des Wellengehäuses 2 gegenüber dem Motorgehäuse 32 kann erreicht werden, daß mit der Inbetriebnahme des Stabmixers der Strömungskanal nicht freigegeben wird bzw. das Ventil nicht geöffnet wird, so daß ein derart aufgebauter Stabmixer in einer herkömmlichen Art und Weise ohne eine Luftzufuhr in den unteren Raum 6 der Gehäuseglocke 1 betrieben werden kann (Figuren 8A und 8B). Die Gehäuseglocke 1 ist hier vom offenen unteren Raum 6 her durch eine Kreisscheibe 69 abgedeckt, die mit radial erstreckenden Schlitzen 71 zum Ansaugen von Nahrungsmitteln und in der Mitte mit einer Bohrung 70 versehen ist. Diese Scheibe 49 verhindert ein unbeabsichtigtes Eingreifen einer Hand, so daß Verletzungen am Messer 5 vermieden werden. Gleichzeitig dringen aber über die Schlitze 71 und die Bohrung 70 Nahrungsmittel in die Glocke 1 ein, wenn diese nicht vom Boden eines Arbeitsbehälters verschlossen ist.

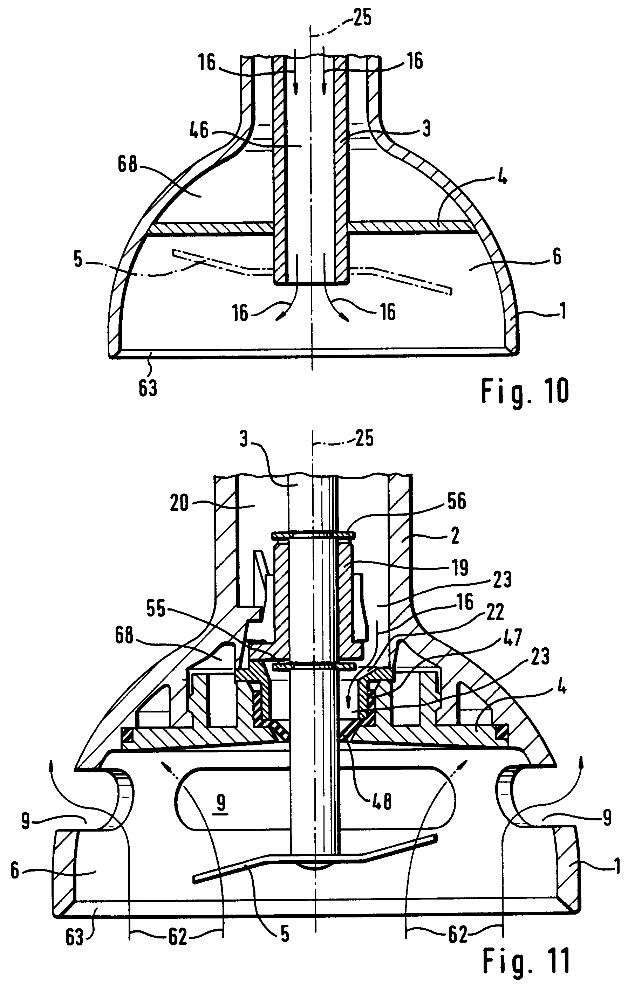

In Fig. 10 ist schematisch ein nicht erfindungsgemäßer Stabmixer dargestellt, in der die Arbeitswelle 3 als Hohlwelle ausgebildet ist. In dieser Ausführung wird über den Innenraum 46 der Hohlwelle in den unteren Raum 6 der Gehäuseglocke 1 Luft zugeführt, um den sich dort aufbauenden Unterdruck aufzuheben. In diesen Strömungskanal 46 könnte erfindungsgemäß ein Ventil eingebaut werden, wie es in der Fig. 1 dargestellt ist.

Die Fig. 11 zeigt eine Ausführungsvariante, in der oberhalb der Abdeckplatte 4 eine an der Arbeitswelle 3 anliegende Ringdichtung 47 angeordnet ist, die einen Strömungskanal 22, 23 entlang des Verlaufs der Strömungspfeile 16 verschließt. Mit einem sich in dem Raum 6 der Gehäuseglocke 1 aufbauenden Unterdruck wird die Dichtlippe 48 der Ringdichtung 47 von der Arbeitswelle 3 federnd wegbewegt, so daß der Strömungskanal 22, 23 zu dem unteren Raum 6 hin freigegeben wird. Mit einem Nachlassen des Unterdrucks legt sich diese Ringdichtung 47 wieder an die Arbeitswelle 3 an, so daß die Luftzufuhr verringert und dann unterbrochen wird. Die Strömungspfeile 62 geben etwa den Strömungsverlauf der Nahrungsmittel im Betrieb des Stabmixers an, die vom Messer 5 über die Öffnung 63 angesaugt und nach deren Zerkleinerung und Durchmischung über die seitlichen Schlitze 9 der Gehäuseglocke 1 nach außen in den Behälter (nicht dargestellt) geschleudert werden. Bei diesem Ausführungsbeispiel ist das Lagerteil 19 zwischen den Sicherungsringen 55, 56 axial und radial auf der Arbeitswelle 3 gesichert.

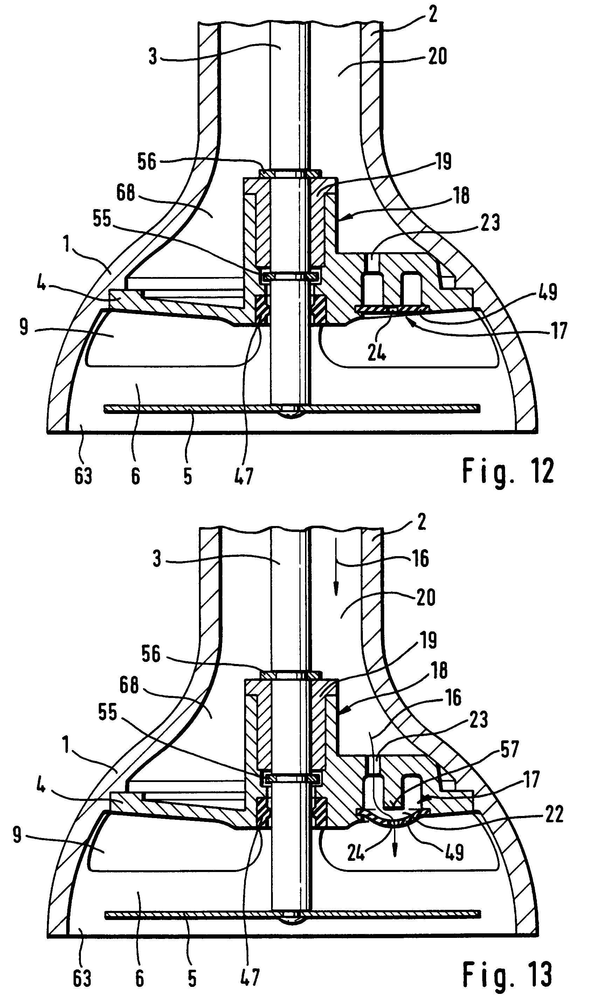

Aus den Figuren 12 und 13 ist eine weitere Ausführungsform einer Ventilanordnung 17 in der Gehäuseglocke 1 eines Stabmixers dargestellt, die hier aus einem Klappenventil mit einer Membran 49 besteht, die eine Bohrung 24 aufweist. Die Abdeckplatte 4 weist im Bereich der Bohrung 24 eine Dichtfläche 57 auf, die in Fig. 12 die Bohrung 24 dichtend verschließt. Die Ventilanordnugn 17 ist also hier nicht zentral an der Arbeitswelle 3, sondern seitlich an der Abdeckplatte 4 ausgebildet. Sobald im unteren Raum 6 ein Vakuum entsteht, hebt die Membran 49 vom Dichtsitz 57 ab (Fig. 13) und es kann Luft über den Ringraum 20, die in der Abdeckplatte 4 ausgebildeten Strömungskanäle 23, 22 und die Bohrung 24 Luft in den unteren Raum 6 einströmen.

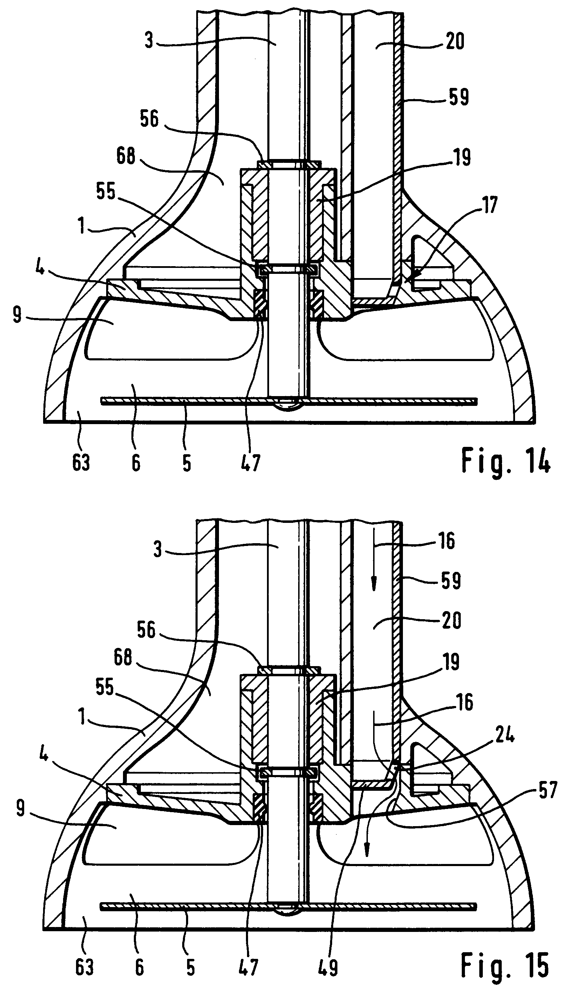

Gleiches gilt für den Stabmixer nach den Figuren 14 und 15, wobei das Ventil 17 ebenfalls von einer Membran 49 mit einer Bohrung 24 gebildet wird, die aber in diesem Ausführungsbeispiel nicht in Längsrichtung der Arbeitswelle 3, sondern quer dazu verläuft und die mit einer seitlich an der Abdeckplatte 4 ausgebildeten Dichtfläche 57 zusammenwirkt. Die Membran 49 ist an ihrem oberen freien Ende mit einem Schieber 59 verbunden, der über in der Zeichnung nicht näher dargestellte Führungseinrichtungen im Wellengehäuse 2 axial geführt wird. Diese Ventilanordnung 17 öffnet nur dann, wenn der Schieber 59 gemäß Fig. 15 nach oben verschoben wird, wobei die Bohrung 24, also der Strömungskanal, von der Dichtfläche 57 abhebt.

In den vorstehend anhand der Figuren beschriebenen Ausführungsformen sind verschiedene, konstruktive Anordnungen erläutert, um Luft in den unteren Raum 6 der Gehäuseglocke 1 einzuführen. Weiterhin ist die Möglichkeit dargestellt, einen Stabmixer in eine solche Betriebsstellung zu versetzen, daß eine Luftzufuhr vollständig unterbunden wird. Es ist verständlich, daß die letztere Maßnahme auch in Verbindung mit weiteren unterschiedlichen Ventilanordnungen ausgeführt werden kann.

## Patentansprüche

1. Elektromotorisch angetriebener Stabmixer, zum Rühren oder Zerkleinern von Nahrungsmitteln in einem Behälter, der ein im Bereich des Abtriebsendes einer in einem Wellengehäuse (2) gelagerten Arbeitswelle (3) angeordnetes Arbeitswerkzeug (5), insbesondere ein Messer, aufweist, das vom unteren Raum einer Gehäuseglocke (1) umschlossen ist, die in Richtung des Wellengehäuses (2) durch eine Abdeckplatte (4) flüssigkeitsdicht gegenüber dem Innenraum des Wellengehäuses (2) abgedichtet ist, wobei die Gehäuseglocke (1) nach unten von einer Öffnung (63) begrenzt ist und seitlich zum Auswerfen von Nahrungsmitteln Öffnungen (9) aufweist,
**dadurch gekennzeichnet**,
daß der Stabmixer mit Mitteln versehen ist, durch die bei in Nahrungsmittel eingetauchter Gehäuseglocke (1) in den unteren Raum (6) von außen Luft zuführbar ist, wobei zur Luftzufuhr in den unteren Raum (6) im Wellengehäuse (2) des Stabmixers ein Strömungskanal (12, 13, 22, 23, 24) ausgebildet ist, in dem ein Ventil (10, 17) angeordnet ist.

2. Stabmixer nach Anspruch 1,
**dadurch gekennzeichnet**,
daß die Mittel aus einem Gebläse (50) bestehen.

3. Stabmixer nach Anspruch 1,
**dadurch gekennzeichnet**, daß die Mittel darin bestehen, daß zumindest in einem Teilbereich des von der Gehäuseglocke (1) umschlossenen unteren Raums (6) durch die Rotation des Arbeitswerkzeugs (5) bei in die Nahrungsmittel eingetauchter Gehäuseglocke (1) ein Unterdruck entsteht, der kleiner als der Atmosphärendruck ist.

4. Stabmixer nach Anspruch 1,
**dadurch gekennzeichnet**,
daß der Strömungskanal (12, 13, 22, 23, 24) so eng bemessen ist, daß der Druck im unteren Raum (6) in bestimmten Grenzen gehalten wird.

5. Stabmixer nach Anspruch 1,
**dadurch gekennzeichnet**,
daß sich der Strömungskanal (12, 13, 22, 23, 24) von der Gehäuseglocke (1) ausgehend, über den Ringraum (20) des Wellengehäuses (2) und den an dem Motorgehäuse (32) ausgebildeten Öffnungen (53, 54) zur Atmosphäre hin fortsetzt.

6. Stabmixer nach Anspruch 1,
**dadurch gekennzeichnet**,
daß die Arbeitswelle (3) eine Hohlwelle ist, deren Innenraum (46) mindestens einen Teil des Strömungskanals (22, 23, 24) bildet.

7. Stabmixer nach Anspruch 1,
**dadurch gekennzeichnet**,
daß das Ventil (10, 17) ein verschließbares Ventilteil (14, 36, 48) aufweist

8. Stabmixer nach Anspruch 7,
**dadurch gekennzeichnet**,
daß sich das Ventil (10, 17) in Abhängigkeit des Gerätebetriebs mehr oder weniger öffnet.

9. Stabmixer nach Anspruch 7,
**dadurch gekennzeichnet**,
daß das Ventil (10) in der Abdeckplatte (4) angeordnet ist, die die Gehäuseglocke (1) zu dem Wellengehäuse (2) hin abdeckt.

10. Stabmixer nach Anspruch 7,
**dadurch gekennzeichnet**,
daß das Ventilteil (14, 36) axial zu der Arbeitswelle (3) verschiebbar angeordnet ist.

11. Stabmixer nach Anspruch 7,
**dadurch gekennzeichnet**,
daß das Ventilteil (14, 47) radial zu der Arbeitswelle (3) verschiebbar angeordnet ist.

12. Stabmixer nach Anspruch 10 oder 11,
**dadurch gekennzeichnet**,
daß das Ventilteil eine Kugel (14) ist, die in Ruhestellung mittels einer Feder (15) den Strömungskanal (22, 23, 24) verschließt.

13. Stabmixer nach Anspruch 10,
**dadurch gekennzeichnet**,
daß das Ventilteil (36) ein verschiebbares Teil der Arbeitswelle (3) und/oder eines die Arbeitswelle (3) haltendes Lager (19), das zwischen der Gehäuseglocke (1) und dem Wellengehäuse (2) angeordnet ist, bildet.

14. Stabmixer nach Anspruch 13,
**dadurch gekennzeichnet**,
daß die Arbeitswelle (3) unterteilt ist und die Arbeitswellenteile (35, 36) durch eine Kupplung verbunden sind, wobei die Kupplungsteile ineinander eingreifende Führungsteile (37, 38) besitzen, die bei einer radialen Verdrehung der Arbeitswellenteile (35, 36) gegeneinander eine axiale Verschiebung der Arbeitswelle (3) bewirken und den Strömungskanal (22, 23) freigeben.

15. Stabmixer nach Anspruch 14,
**dadurch gekennzeichnet**,
daß die Führungsteile durch Vorsprünge (37) an dem einen Kupplungsteil und durch Nockenflächen (38) an dem anderen Teil gebildet sind.

16. Stabmixer nach Anspruch 13,
**dadurch gekennzeichnet**,
daß das Ventilteil (36) durch eine Nut (51) in der Außenfläche gebildet wird, die zusammen mit einem ortsfesten Dichtring (31) das Ventil (17) bildet.

17. Stabmixer nach Anspruch 13,
**dadurch gekennzeichnet**,
daß das Wellengehäuse (2) gegen ein anderes Gehäuseteil (32) verdrehbar gehalten ist, wobei in einer Grundstellung das Ventil (17) gegen eine Öffnung gesperrt ist und in einer anderen Grundstellung das Ventil (17) zum Öffnen freigegeben ist.

18. Stabmixer nach Anspruch 7,
**dadurch gekennzeichnet**,
daß das Ventilteil durch eine Ringdichtung (47) gebildet ist, das eine flexible Dichtlippe (48) aufweist, die bei Unterdruck im unteren Raum (6) von der Arbeitswelle (3) federnd abhebt.

19. Stabmixer nach Anspruch 14,
**dadurch gekennzeichnet**,
daß die Arbeitswellenteile (35, 36) gegen die Kraft einer Feder (15), die die Arbeitswellenteile (35, 36) in einer Ruhestellung hält, verschiebbar angeordnet sind.

20. Stabmixer nach Anspruch 17,
**dadurch gekennzeichnet**,
daß das Ventil ein Klappenventil ist und aus einer Membran (49) mit einer Öffnung (24) besteht, die in Schließrichtung von einer gehäusefesten Dichtfläche (57) verschlossen wird.

21. Stabmixer nach Anspruch 20,
**dadurch gekennzeichnet**,
daß an der Membran (49) ein Schieber (59) ausgebildet ist.

## Claims

1. A hand blender powered by an electric motor, for mixing or comminuting foodstuffs in a container, including a processing tool (5), in particular a cutter blade, which is disposed in the area of the output end of a working shaft (3) carried in a shaft housing (2) and is enclosed by the lower chamber (6) of a bell-shaped casing (1) sealed in the direction of the shaft housing (2) in fluid-tight manner against the inner chamber of the shaft housing (2) by means of a cover plate (4), with the bell-shaped casing (1) having its lower end bounded by an aperture (63) and including lateral openings (9) for the discharge of foodstuffs,
**characterized in that** the hand blender is provided with a structure through which outside air can be supplied to the lower chamber (6) when the bell-shaped casing (1) is immersed in the foodstuffs, with a flow channel (12, 13, 22, 23, 24) incorporating a valve (10, 17) being formed in the shaft housing (2) of the hand blender for the supply of air into the lower chamber (6).

2. The hand blender as claimed in claim 1,
**characterized in that** said structure includes a fan device (50).

3. The hand blender as claimed in claim 1,
**characterized in that** said structure consists in that at least in a partial area of the lower chamber (6) enclosed by the bell-shaped casing (1) a pressure below atmospheric is produced by rotation of the processing tool (5) when the bell-shaped casing (1) is immersed in the food.

4. The hand blender as claimed in claim 1,
**characterized in that** the flow channel (12, 13, 22, 23, 24) has such narrow dimensions that the pressure in the lower chamber (6) is maintained within specified limits.

5. The hand blender as claimed in claim 1,
**characterized in that** the flow channel (12, 13, 22, 23, 24) extends from the bell-shaped casing (1), proceeding through the annular chamber (20) within the shaft housing (2) and the openings (53, 54) provided on the motor housing (32), to atmosphere.

6. The hand blender as claimed in claim 1,
**characterized in that** the working shaft (3) is a hollow shaft, the interior (46) of which defines at least part of the flow channel (22, 23, 24).

7. The hand blender as claimed in claim 1,
**characterized in that** the valve (10, 17) includes a closable valve member (14, 36, 48).

8. The hand blender as claimed in claim 7,
**characterized in that** the valve (10, 17) opens a greater or lesser amount in dependence upon operation of the appliance.

9. The hand blender as claimed in claim 7,
**characterized in that** the valve (10) is arranged in the cover plate (4) covering the bell-shaped casing (1) relative to the shaft housing (2).

10. The hand blender as claimed in claim 7,
**characterized in that** the valve member (14, 36) is axially slidable relative to the working shaft (3).

11. The hand blender as claimed in claim 7,
**characterized in that** the valve member (14, 47) is radially slidable relative to the working shaft (3).

12. The hand blender as claimed in claim 10 or 11,
**characterized in that** the valve member is a ball (14) which, under the action of a spring (15), closes the flow channel (22, 23, 24) in the position of rest.

13. The hand blender as claimed in claim 10,
**characterized in that** the valve member (36) is a slidable part of the working shaft (3) and/or of a bearing (19) supporting the working shaft (3) and arranged between the bell-shaped casing (1) and the shaft housing (2).

14. The hand blender as claimed in claim 13,
**characterized in that** the working shaft (3) is divided and the working shaft parts (35, 36) are connected with each other by a coupling arrangement in which the coupling members possess interengaging guide members (37, 38) which on a radial rotating motion of the working shaft parts (35, 36) relative to each other effect an axial displacement of the working shaft (3) and open the flow channel (22, 23).

15. The hand blender as claimed in claim 14,
**characterized in that** the guide members are formed by projections (37) on the one coupling member and by cam surfaces (38) on the other coupling member.

16. The hand blender as claimed in claim 13,
**characterized in that** the valve member (36) defines a groove (51) in the outer surface which cooperates with a fixed ring seal (31) to provide the valve (17).

17. The hand blender as claimed in claim 13,
**characterized in that** the shaft housing (2) is rotatable relative to another housing section (32), with the valve (17) closing an opening in one position and the valve (17) releasing the opening in another position.

18. The hand blender as claimed in claim 7,
**characterized in that** the valve member includes a ring seal (47) having a flexible sealing lip (48) which lifts clear of the working shaft (3) resiliently in the presence of a pressure below atmospheric in the lower chamber (6).

19. The hand blender as claimed in claim 14,
**characterized in that** the working shaft parts (35, 36) are slidably arranged in opposition to the force of a spring (15) holding the working shaft parts (35, 36) in a position of rest.

20. The hand blender as claimed in claim 17,
**characterized in that** the valve is a flap valve which includes a diaphragm (49) with an opening (24), said opening being closed in the closing direction by a sealing surface (57) arranged fast with the housing.

21. The hand blender as claimed in claim 20,
**characterized in that** it includes a sliding member (59) provided on the diaphragm (49).

## Revendications

1. Mixeur a main mû par un moteur électrique afin de battre ou de broyer des aliments dans un récipient, qui présente un outil de travail (5), en particulier un couteau, disposé à proximité de l'extrémité d'entraînement d'un arbre moteur (3) logé dans un boîtier d'arbre (2), qui est entouré par l'espace inférieur (6) d'une cloche de boîtier (1), qui est rendue étanche en direction du boîtier d'arbre (2) par une plaque de recouvrement (4) de façon étanche aux liquides vis-à-vis de l'espace intérieur du boîtier d'arbre (2), la cloche de boîtier (1) étant limitée par le bas par une ouverture (63) et présentant latéralement des ouvertures (9) en vue de l'éjection d'aliments, caractérisé en ce que le mixeur à main est muni de moyens à travers lesquels, dans le cas de la cloche de boîtier (1) plongée dans les aliments, de l'air peut être amené de l'extérieur dans l'espace inférieur (6), un canal d'écoulement (12, 13, 22, 23, 24) en vue de l'amenée d'air étant ménagé dans l'espace inférieur (6) dans le boîtier d'arbre (2) du mixeur à main, canal dans lequel est disposée une soupape (10, 17).

2. Mixeur à main selon la revendication 1, caractérisé en ce que les moyens se composent d'un ventilateur (50).

3. Mixeur à main selon la revendication 1, caractérisé en ce que les moyens consistent en qu'au moins, dans une partie de l'espace inférieur (6) entouré par la cloche de boîtier (1) est obtenue, grâce à la rotation de l'outil de travail (5), lorsque la cloche de boîtier (1) est plongée dans les aliments, une dépression inférieure à la pression atmosphérique.

4. Mixeur à main selon la revendication 1, caractérisé en ce que le canal d'écoulement (12, 13, 22, 23, 24) est dimensionné de façon étroite de sorte que la pression dans l'espace inférieur (6) est maintenue à l'intérieur de limites déterminées.

5. Mixeur à main selon la revendication 1, caractérisé en ce que le canal d'écoulement (12, 13, 22, 23, 24) en partant de la cloche de boîtier (1) s'étend jusqu'à l'atmosphère par l'intermédiaire de l'espace annulaire (20) du boîtier d'arbre (2) et des ouvertures (53, 54) pratiquées sur le boîtier du moteur (32).

6. Mixeur à main selon la revendication 1, caractérisé en ce que l'arbre moteur (3) est un arbre creux, dont l'espace intérieur (46) forme au moins une partie du canal d'écoulement (22, 23, 24).

7. Mixeur à main selon la revendication 1, caractérisé en ce que la soupape (10, 17), comporte un élément de soupape (14, 36, 48) pouvant être obturé.

8. Mixeur à main selon la revendication 7, caractérisé en ce que la soupape (10, 17) s'ouvre plus ou moins en fonction de l'utilisation de l'appareil.

9. Mixeur à main selon la revendication 7, caractérisé en ce que la soupape (10) est disposée dans la plaque de recouvrement (4), qui recouvre la cloche de boîtier (1) en direction du boîtier d'arbre (2).

10. Mixeur à main selon la revendication 7, caractérisé en ce que l'élément de soupape (14, 36) est disposé déplaçable axialement par rapport à l'arbre moteur (3).

11. Mixeur à main selon la revendication 7, caractérisé en ce que l'élément de soupape (14, 47) est disposé déplaçable radialement par rapport à l'arbre moteur (3).

12. Mixeur à main selon la revendication 10 ou 11, caractérisé en ce que l'élément de soupape est une bille (14), qui, en position de repos, obture le canal d'écoulement (22, 23, 24) au moyen d'un ressort (15).

13. Mixeur à main selon la revendication 10, caractérisé en ce que l'élément de soupape (36) forme une partie déplaçable de l'arbre moteur (3) et/ou d'un palier (19) retenant l'arbre moteur (3), qui est disposé entre la cloche de boîtier (1) et le boîtier d'arbre (2).

14. Mixeur à main selon la revendication 13, caractérisé en ce que l'arbre moteur (3) est subdivisé et les parties d'arbre moteur (35, 36) sont réunies par un accouplement, les parties de l'accouplement possédant des éléments de guidage (37, 38) pénétrant l'un dans l'autre, qui, lors d'une rotation radiale des parties de l'arbre moteur (35, 36) l'une par rapport à l'autre, provoquent un déplacement axial de l'arbre moteur (3) et dégagent le canal d'écoulement (22, 23).

15. Mixeur à main selon la revendication 14, caractérisé en ce que les éléments de guidage sont formés par des saillies (37) sur une partie de l'accouplement et par des surfaces de came (38) sur l'autre partie.

16. Mixeur à main selon la revendication 13, caractérisé en ce que l'élément de soupape (36) est formé par une rainure (51) dans la surface extérieure, qui forme la soupape (17) conjointement avec une bague d'étanchéité stationnaire (31).

17. Mixeur à main selon la revendication 13, caractérisé en ce que le boîtier d'arbre (2) est disposé rotatif vis-à-vis d'une autre partie de boîtier (32), dans une position initiale, la soupape (17) étant bloquée contre une ouverture et dans une autre position initiale, la soupape (17) pouvant s'ouvrir.

18. Mixeur à main selon la revendication 7, caractérisé en ce que l'élément de soupape est formé par un joint annulaire d'étanchéité (47), qui présente une lèvre d'étanchéité flexible (48), s'écartant élastiquement de l'arbre moteur (3) lors d'une dépression dans l'espace inférieur (6).

19. Mixeur à main selon la revendication 14, caractérisé en ce que les parties d'arbre moteur (35, 36) sont disposées déplaçables à l'encontre de la force d'un ressort (15), qui maintient les parties d'arbre moteur (35, 36) dans une position de repos.

20. Mixeur à main selon la revendication 17, caractérisé en ce que la soupape est une soupape à clapet et se compose d'une membrane (49) avec une ouverture (24) qui est fermée dans le sens de la fermeture par une surface d'étanchéité (57) fixe sur le boîtier.

21. Mixeur selon la revendication 20, caractérisé en ce qu'une coulisse (59) est réalisée sur la membrane (49).
